# EUROPEAN PATENT APPLICATION

(11) **EP 4 678 427 A1**
(43) Date of publication of application: **14.01.2026**
(21) Application number: 24187685.3
(22) Date of filing: 10.07.2024
(51) Int. Cl.: B60D 1/14, B60D 1/155

(54) **DRAWBAR FOR TRAILER WITH REINFORCING BRACKET**

(71) Applicant: VBG Group AB (Publ), 461 34 Trollhättan (SE)
(72) Inventor: Lysén, Robin, 464 93 Mellerud (SE); FORSDAHL, Gustav, 462 94 Frändefors (SE); BELLMAN, Maria, 461 59 Trollhättan (SE); KALLIOKORPI, Miso, 462 41 Vänersborg (SE)
(74) Representative: Lind Edlund Kenamets Intellectual Property AB

(57) **Abstract**

The present invention relates to a drawbar (100) for a trailer (10) or dolly (14). The drawbar (100) comprises: A hollow elongated main profile (110) comprising, at an end portion (112) thereof, a first side surface (114), an opposite second side surface (116), and a top surface (118) connecting the first and second side surfaces (114, 116), and a reinforcing bracket (140) comprising a first side (144), an opposite second side (146), and a top side (148) connecting the first and second side (144, 146). The top side (148) abuts the top surface (118) of the main profile (110), and the first side (144) and the second side (146) abut an associated one of the first and second side surface (114, 116) of the main profile (110). At least one first fixating element (150) extends through the reinforcing bracket (140) at the first side (144) and through the main profile at the first side surface (114). At least one second fixating element (160) extends through the reinforcing bracket (140) at the second side (146) and through the main profile (110) at the second side surface (116). A trailer (10) or dolly (14) and a method for manufacturing a drawbar (100) are also provided.

## Description

### TECHNICAL FIELD OF THE INVENTION

The invention relates to the field of trailers. More particularly it is related to a drawbar for a trailer or dolly, to a trailer or dolly comprising such a drawbar, and to a method for manufacturing a drawbar.

### BACKGROUND

To enable connection of trailers to towing vehicles, trailers are often provided with drawbars. Such drawbars are typically extending along a main traveling direction of the trailer while projecting from a forward end of the trailer. Drawbars are in turn typically equipped with a connection feature, such as a hook, loop, ball or receptacle for connecting to a corresponding connection feature on a towing vehicle. Such connection feature is typically arranged at the forward end of the drawbar.

Since a drawbar is the primary link between a towing vehicle (e.g. a tractor) and a trailer (which could weigh more than 40 metric tons) it must be purposely designed to withstand the high levels mechanical stress brought by e.g. the towing vehicle accelerating, breaking, and turning, vibrations and environmental factors.

To this end, drawbars generally include a housing or tube which is reliantly attached to the trailer chassis. In some types of drawbars the housing is provided with a connection feature at its forward end. However, in other types of drawbars, a smaller tube, i.e. a tube of a smaller diameter which fits in the housing, is arranged in and attached to the housing in a way where the smaller tube extends out of the housing in the forward direction. In this way, drawbars of different lengths may be manufactured. The housing and the smaller tube are typically reliantly fixed to each other or slidingly arranged with respect to each other so as to form a telescopic drawbar. The smaller tube of the drawbar is in turn typically equipped with the connection feature.

In some telescopic drawbars on the market today, the outer housing is formed as an elongated U-shaped profile. By arranging the U-shaped profile underneath a structure of the trailer, with the open end facing upwards towards the trailer structure, and attaching the U-shaped profile to the trailer using vertically arranged bolts a space is formed between the trailer structure and the U-shaped profile. An inner profile can be arranged inside this space, wherein the inner profile can slide relative the U-shape to realize a telescopic drawbar. By adapting the size and thickness of the housing it is possible to provide a housing which is capable of coping with the high levels mechanical stress it is subjected to during use.

A drawback with this type of housing is that the elongated U-profile forming the housing needs to be designed to cope with any load that the housing is subjected to during use. Given the fact that the load distribution is not equal throughout the housing, some parts of the elongated U-profile are in practice unnecessarily sturdy or else there is a risk that the housing is deformed or even breaks.

### SUMMARY OF THE INVENTION

With the above in mind, it is an objective of the present invention to provide an improved drawbar for a trailer or a dolly, as well as a trailer or dolly comprising such drawbar. Another objective is to provide a method for manufacturing a drawbar.

Another objective is to provide such a drawbar which requires less material to manufacture.

Another objective is to provide such a drawbar which is lighter.

Another objective is to provide such a drawbar which is more cost-effective.

Another objective is to provide such a drawbar which is stronger while at the same time being lighter.

Another objective is to provide such a drawbar which may be adapted to different load situations.

To achieve at least one of the above objects and also other objects that will be evident from the following description, a drawbar for a trailer or dolly, having the features defined in claim 1 is provided according to the present inventive concept. A trailer or dolly comprising such drawbar is provided according to claim 15, and a method for manufacturing a drawbar is provided according to claim 16.

More specifically, according to a first aspect, there is provided a drawbar for a trailer or dolly comprising:
a hollow elongated main profile, configured to be arranged substantially parallel to a principal towing direction of the trailer/dolly for pulling the trailer/dolly, the hollow elongated main profile comprising, at an end portion thereof, a first side surface, an opposite second side surface, and a top surface connecting the first and second side surfaces, each surface extending over a portion of a longitudinal extension of the hollow elongated main profile,
a reinforcing bracket comprising a first side, an opposite second side, and a top side connecting the first and second side, wherein the top side abuts the top surface of the main profile, and wherein the first side and the second side abut an associated one of the first and second side surface of the main profile, and
at least one first fixating element extending through the reinforcing bracket at the first side and through the main profile at the first side surface, and at least one second fixating element extending through the reinforcing bracket at the second side and through the main profile at the second side surface.

The drawbar may be designed for and hence suitable for a trailer or dolly and may e.g. be used on a rigid center axle trailer. As another example, the drawbar is mounted onto a dolly which in turn is configured to be rotatably coupled to a trailer.

The present invention is based on the realization that by reinforcing the drawbar where most needed, a strong and light drawbar may be realized while using less material as compared to prior art drawbars. This means in turn that the environmental impact caused by the drawbar may be significantly reduced at an overall reduced cost.

More specifically, by the drawbar comprising a reinforcing bracket comprising a first side, an opposite second side, and a top side connecting the first and second side, wherein the top side abuts the top surface of the main profile, and wherein the first side and the second side abut an associated one of the first and second side surface of the main profile, and at least one first fixating element extending through the reinforcing bracket at the first side and through the main profile at the first side surface, and at least one second fixating element extending through the reinforcing bracket at the second side and through the main profile at the second side surface, the main profile may be reinforced where most needed, i.e. at the end portion of the main profile. Since a center axle trailer has its axle or axles provided substantially at the center of the trailer along its length, the drawbar of a center axle trailer will in addition to pulling and assisting in reducing the speed of the trailer also be subjected to significant vertical loads. Such vertical loads emanates from e.g. accelerating, breaking, uneven load distribution and trailer movements caused by uneven road surfaces. The vertical loads may be substantial. The vertical loads are predominantly pushing the drawbar in downward direction or are of the greatest magnitude while pushing the drawbar in downward direction. This means that the top surface of the end portion of the main profile is subjected to significant bending forces risking deforming the end portion of the main profile. Further, also the side surfaces of the end portion of the main profile is subjected to significant lateral forces e.g. emanating from when the trailer is turned or affected by an uneven road surface. Given the complex load situation that the main profile is subjected to during use, the main profile may be made lighter while using less material when the main profile is combined with a reinforcing bracket of the above type which is fixed to the end portion of the main profile. In practice, the main profile may be made from a thinner material resulting in an overall lower material consumption irrespective of the addition of the reinforcing bracket and the fixating elements.

It is however, to be noted that the load distribution of the end portion of the main profile may be different given different circumstances. Given this, the wordings relating to the orientations (e.g. top and side) of the respective surfaces of the main profile and the sides of the reinforcing bracket are to be construed as relative terms. Although the top surface of the main profile is typically arranged to face in a vertically upward direction, it may be arranged to face in another direction, such as vertically downward direction or a horizontal direction.

The reinforcing bracket may be integrally formed.

The reinforcing bracket may be formed by joining two or more parts.

The drawbar may further comprise an inner profile slidingly arranged inside the main profile, such that a length of the drawbar is adjustable, wherein the inner profile extends out of an open end of the main profile at said end portion, wherein the inner profile is configured to be locked in at least two positions relative the main profile, and wherein an end portion of the inner profile comprises a coupling arrangement configured to be connected to a towing vehicle, such as a truck. Hereby, the main profile may act as a guiding profile for guiding the telescopic movement of the inner profile. Thus, the drawbar may be formed as a telescopic drawbar.

To this end, the drawbar may comprise a locking arrangement which may be unlocked and locked by a user of the drawbar, such that length of the drawbar is easily adjusted under field conditions. For instance, a user may adjust the length of the drawbar to a goods type currently at hand. In this way the drawbar becomes more versatile and allow connection to the towing vehicle even when the trailer is loaded with goods of varying dimensions.

Further, the inner profile may be configured to be locked in at least two positions relative to the main profile by means of fixation elements such as screws or bolts. This means in practice, that the length of the drawbar may be adjusted relatively easily using standard tools. Thus, the drawbar may be adapted to different situations throughout its lifecycle.

The reinforcing bracket may be arranged outside of the main profile, which is advantageous in that the main profile may be reinforced where most needed without affecting the space available within the main profile. Thus, the main profile may be reinforced while still leaving the same amount of room for e.g. an inner profile to be arranged within the main profile.

The reinforcing bracket may be arranged inside of the main profile, between an inner profile and the main profile, which is advantageous in that a hidden reinforcement of the main profile may be realized. Further, the reinforcing bracket may be used to adapt the amount of room for e.g. an inner profile to be arranged within the main profile. In other words, the reinforcing bracket may fill out a certain amount of a cross-section of the main profile such that the space available for an inner profile to be arranged within the main profile may be purposedly reduced by a certain amount. Furthermore, the reinforcing bracket may be protected by the main profile. Thus, the reinforcing bracket may be protected from wear and tear emanating from chocks and harsh weather conditions.

The reinforcing bracket may comprise a recess configured to receive and support a slide block, which is advantageous in that the reinforcing bracket may serve the additional purpose of acting as a holder for a slide block. By the reinforcing bracket comprising a recess configured to receive and support a slide block, a slide block may be inserted in the recess such that the friction between the main profile and the inner profile may be reduced, hence facilitating translation of the inner profile within the main profile. Further, the wear at the interface between the main profile and the inner profile may be counteracted or prevented by providing a slide block at the interface.

The main profile may comprise a slit extending through the main profile at the top surface, the slit extending from an open end of the main profile at said end portion substantially along the longitudinal extension of the main profile and at least partially overlapping with the reinforcing bracket, which is advantageous in that the main profile may be allowed to expand or may be allowed to be compressed slightly at the end portion such that a good or adequate contact between the main profile and the reinforcing bracket may be realized. Thus, by the main profile being allowed to expand or to be compressed slightly at the end portion when mounting or fixing the reinforcing bracket to the main profile an improved surface contact between the between the main profile and the reinforcing bracket may be realized. In this forces may be efficiently transferred between the main profile and the reinforcing bracket. Further, in this way wear at the interface between the main profile and the reinforcing bracket may be counteracted or prevented.

The slit may extend beyond the first and second fixating element along the longitudinal extension of the main profile as seen from the open end of the main profile, which is advantageous in that the main profile may be allowed to expand or may be allowed to be compressed slightly by the first fixating element and the second fixating element pushing together the main profile and the reinforcing bracket.

The slit may, as seen from the open end of the main profile, terminate by being widened and rounded, which is advantageous in that undesired cracking or extension of the slit may be counteracted or prevented.

The reinforcing bracket may comprise an opening associated with each fixating element and the main profile may comprise an opening associated with each fixating element, which is advantageous in that that the reinforcing bracket may be fixed or attached to the main profile in an intended location by each fixating element extending through its associated opening.

Each fixating element may be threaded fixating element, such as a screw or a bolt, or a rivet, which is advantageous in that the reinforcing bracket may be firmly fixed to the main profile by the fixating elements.

Each fixating element may be a threaded fixating element, and each threaded fixating element may threadedly engage a threaded member arranged inside of the innermost one of the main profile and the reinforcing bracket, which is advantageous in that the reinforcing bracket may be firmly releasably fixed to the main profile, by means of e.g. a nut. Thus, the reinforcing bracket may be firmly releasably fixed to the main in profile a sturdy and cost-effective manner. This also means that the reinforcing bracket may be replaced or exchanged for a reinforcing bracket of a different design. For instance, the reinforcing bracket may be exchanged and replaced with a new one in case of excessive wear. For instance, the reinforcing bracket may be exchanged and replaced with a sturdier one in case the drawbar is to be used in a situation where subjected to an increased load.

Each fixating element may be a threaded fixating element, and wherein the openings of the innermost one of the main profile and the reinforcing bracket may be threaded and wherein each threaded fixating element threadedly engages a respective one of the openings of the innermost one of the main profile and the reinforcing bracket, which is advantageous in that the reinforcing bracket may be firmly releasably fixed to the main profile, without using any further element, such as a nut. Thus, the reinforcing bracket may be firmly releasably fixed to the main profile in a sturdy and cost-effective manner. Further, the reinforcing bracket may be firmly releasably fixed to the main profile in a simplified manner where no further element, such as a nut, needs to be aligned with an associated fixation element. This also means that the reinforcing bracket may be replaced or exchanged for a reinforcing bracket of a different design. For instance, the reinforcing bracket may be exchanged and replaced with a new one in case of excessive wear. For instance, the reinforcing bracket may be exchanged and replaced with a sturdier one in case the drawbar is to be used in a situation where subjected to an increased load.

The at least one first fixating element may comprise at least two first fixating elements and the at least one second fixating element may comprise at least two second fixating elements. By the at least one first fixating element comprising at least two first fixating elements and the at least one second fixating element comprising at least two second fixating elements, a sturdy torque resistant connection between the main profile and the reinforcing bracket may be realized. Further, by the at least one first fixating element comprising at least two first fixating elements and the at least one second fixating element comprising at least two second fixating elements, a potential rotation of the reinforcing bracket in relation to the main profile may be counteracted or prevented.

The at least one first fixating element may comprise at least two first fixating elements.

The at least one second fixating element may comprise at least two second fixating elements.

The main profile may have a substantially rectangular cross-section and may be formed by being bent from sheet metal and/or the reinforcing bracket may be formed by being bent from sheet metal, which is advantageous in that the main profile and/or the reinforcing bracket may be formed in a cost-effective manner with a well-controlled thickness and hence strength. Further, well-established manufacturing techniques generally requiring few manufacturing steps may be utilized.

The main profile may have a substantially rectangular cross-section and may be formed by being bent from sheet metal.

The main profile may have a substantially rectangular cross-section.

The main profile may be formed by being bent from sheet metal.

The reinforcing bracket may be formed by being bent from sheet metal.

According to another aspect of the invention there is provided a trailer or a dolly comprising a drawbar according to the first aspect.

In general, features of this aspect provide similar advantages as discussed above in relation to the first aspect. Consequently, said advantages will not be repeated in order to avoid undue repetition.

According to another aspect of the invention there is provided a method for manufacturing a drawbar for a trailer or dolly from:
a hollow elongated main profile, configured to be arranged substantially parallel to a principal towing direction of the trailer/dolly for pulling the trailer/dolly, the hollow elongated main profile comprising, at an end portion thereof, a first side surface, an opposite second side surface, and a top surface connecting the first and second side surfaces, each surface extending over a portion of a longitudinal extension of the hollow elongated main profile, and
a reinforcing bracket comprising a first side, an opposite second side, and a top side connecting the first and second side, the method comprising:
   arranging the reinforcing bracket at the end portion of the main profile such that the top side abuts the top surface of the main profile and such that the first side and the second side abut an associated one of the first and second side surface of the main profile, and
   fixating the reinforcing bracket to the main profile by inserting at least one first fixating element through the reinforcing bracket at the first side and through the main profile at the first side surface and by inserting at least one second fixating element through the reinforcing bracket at the second side and through the main profile at the second side surface.

In general, features of this aspect provide similar advantages as discussed above in relation to the first aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### BRIEF DESCRIPTION OF THE DRAWINGS

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Figure 1 is a schematic perspective view of a center axle trailer with a drawbar.
Figure 2 is a schematic perspective view of a telescopic drawbar attached to an attachment arrangement configured to be mounted to a trailer chassis.
Figure 3 is a schematic perspective view of a drawbar of a fixed length attached to an attachment arrangement configured to be mounted to a trailer chassis.
Figure 4 is a close up perspective view of an end portion of the hollow elongated main profile comprising a reinforcing bracket.
Figure 5 is a close up perspective view of the end portion of the hollow elongated main profile of Fig. 4 in which the reinforcing bracket has been elevated relative to the main profile to reveal a slit extending through the main profile.
Figure 6 is a close up perspective view of the end portion of a hollow elongated main profile of a drawbar of a different design provided with a reinforcing bracket on an inside of the hollow elongated main profile.
Figure 7 is a close up perspective view of the end portion of the hollow elongated main profile of Fig. 6 where an inner tube of the drawbar has been removed to reveal a recess configured to receive and support a slide block.
Figure 8a - 8g are schematic cross-sectional views of main profiles of alternative designs, realized as a single piece of as an aggregate of multiple parts.
Figure 9 is a flowchart of a method for manufacturing a drawbar from a hollow elongated main profile and a reinforcing bracket.
Figure 10a - 10b show different types of trailers for which the drawbar may be used.

### DETEAILED DESCRIPTION

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

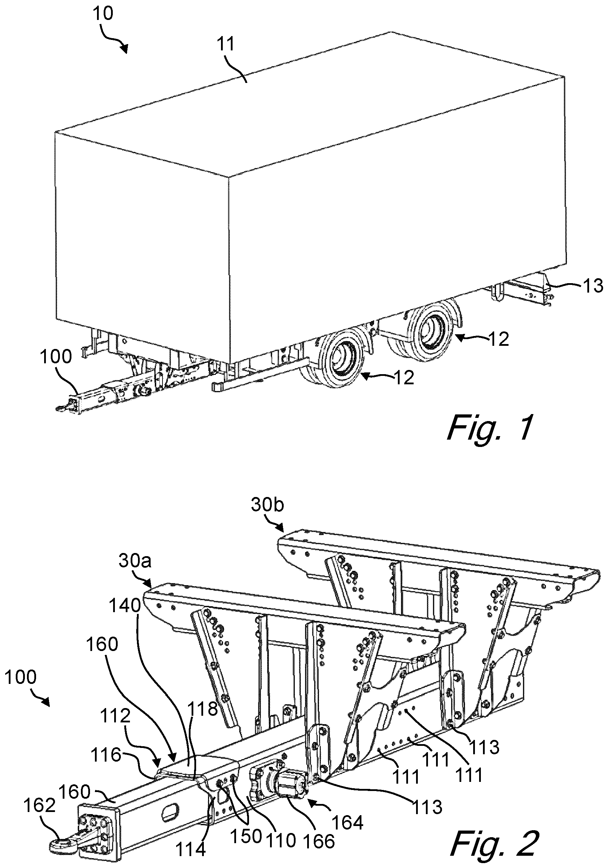

Fig. 1 shows a perspective view of a trailer 10. The trailer 10 is a so-called rigid center axle trailer 10. More specifically, the trailer 10 of Fig. 1 is a rigid center axle truck trailer 10. The trailer 10 has a trailer chassis forming a platform onto which other components or parts of the trailer 10 may be mounted. For example, the trailer 10 may comprise one more wheel axels 12 mounted to the trailer chassis. The trailer 10 may for example comprise a rearguard 13 provided with e.g. lights, reflexes and a license plate. The trailer 10 may for example comprise a transverse bar for underride protection. The trailer chassis further comprises a platform for carrying cargo or freight 11. As is well known in the art, the platform may be provided with a housing for carrying loose goods. As illustrated in Fig. 1, the freight 11 may be in the form a shipping container placed on the platform. Also, the platform may be provided with other types of retention means specifically adapted for the type of freight 11 (e.g. timber, coiled goods such as cables or pipes and vehicles).

Also attached to the chassis of the trailer 10 is a drawbar 100. The drawbar 100 of the trailer 10 is a drawbar 100 according to the present invention. The drawbar 100 is generally elongated and extends parallel to a principal towing direction of the trailer 10 to enable pulling of the trailer 10. Advantageously, the drawbar 100 extends beyond the freight 11 along the principal towing direction e.g. to make it easier to connect the drawbar 100 to a towing vehicle and to counteract that the freight 11 unintentionally comes into contact with the towing vehicle or any element associated with the towing vehicle.

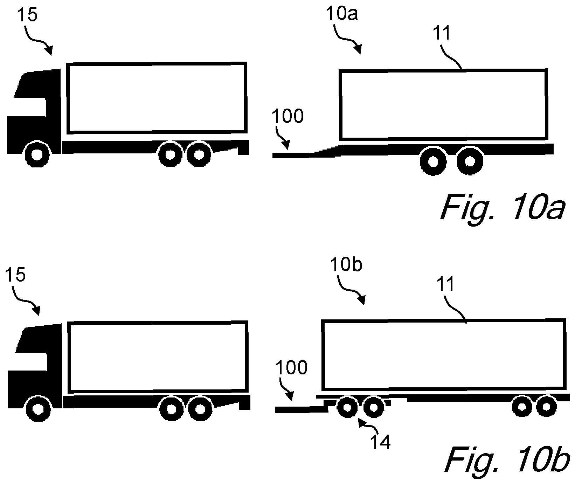

While Fig. 1 shows the drawbar 100 used as a rigid center-axle drawbar it is envisaged that the drawbar could be used for other types of trailers or attached to a dolly, as will be discussed in connection to Figs. 10a - 10b below.

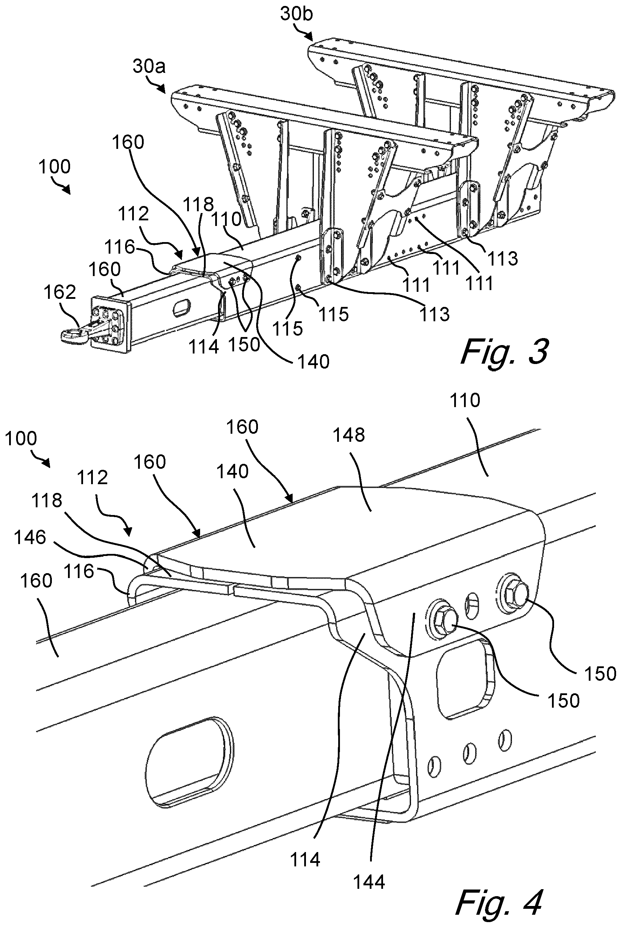

Fig. 2 shows a perspective view of a telescopic drawbar 100 according to some embodiments, after it has been removed from the trailer 10. While there are advantages with a telescopic drawbar 100 in terms of versatility it is noted that the drawbar 100 may also be of a fixed length as will be described in connection with Fig. 3 below.

The telescopic drawbar 100 comprises a hollow elongated main profile 110 (also referred to as the main profile 110) configured to be arranged substantially parallel to the principal towing direction of the trailer 10. The main profile 110 of the depicted drawbar has a substantially rectangular cross-section, but this is merely exemplifying and other cross-sections are envisaged, such as hexagonal or generally polygonal, with sharp or smooth edges. The main profile 110 may for instance have a circular or oval-cross section and be provided with flat surfaces at an end portion thereof. The main profile 110 is elongated and extends along a longitudinal extension axis substantially parallel with the principal towing direction.

As is illustrated in Fig. 2, the main profile 110 comprises at an end portion 112 thereof a first side surface 114 and an opposite second side surface 116. The end portion further comprises a top surface 118 connecting the first and second side surfaces 114, 116. Thus, the top surface 118 extends between the first side surface 114 and the second side surface 116. As illustrated in Fig. 2, each surface 114, 116, 118 extends over the longitudinal extension of the hollow elongated main profile 110. It is however to be noted that each surface 114, 116, 118 may extend over at least a portion of the longitudinal extension of main profile 110. For instance, when the main profile 110 has a cross sectional shape other than a rectangular shape, such as a circular shape, the end portion 112 of the main profile 110 may be provided with a first side surface 114, an opposite second side surface 116, and a top surface 118 connecting the first and second side surfaces 114, 116.

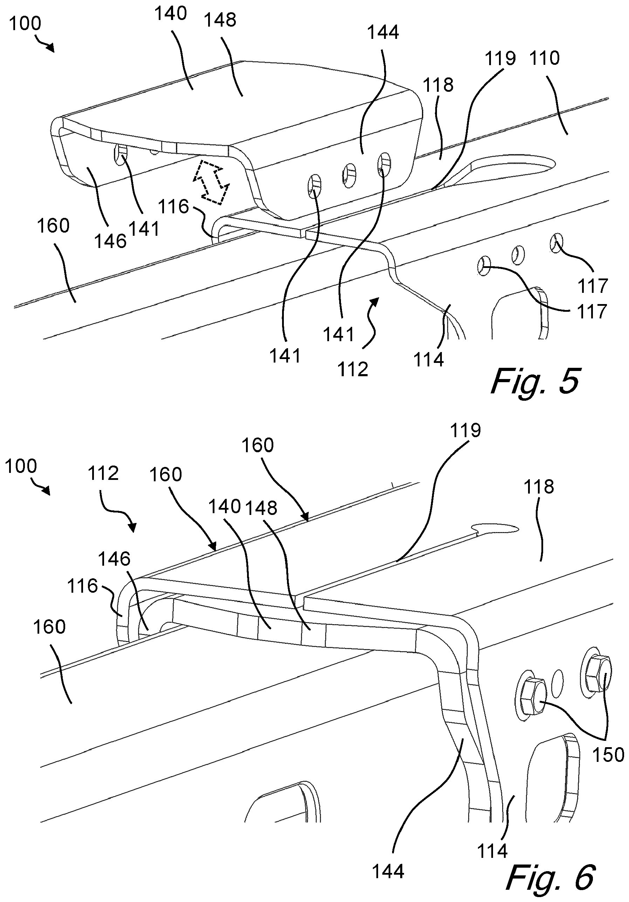

The drawbar 100 further comprises a reinforcing bracket 140. The reinforcing bracket 140 is fixed to the end portion 112 of the main profile by first fixation elements 150 and second fixation elements 160. The second fixation elements 160 are arranged correspondingly to the first fixation elements 150 on an opposite side, i.e. on the second side surface 116 of the main profile, although not visible as such in Fig. 2. The reinforcing bracket 140 and the fixation elements 150, 160 will be discussed in greater detail below with reference to Figs. 4 and 5.

The main profile 100 may typically further comprise a number of holes 111 extending through the main profile 110 on respective sides thereof as illustrated in Fig. 2. Such holes 111 may be arranged in any suitable pattern and may be used to attach other parts or elements of the drawbar 100 to main profile 110. For instance, using the holes 111 it is possible to mount an attachment arrangement 30a, 30b, using e.g. bolts 113. Such attachment arrangement 30a, 30b may be configured to be connected to the chassis frame of the trailer 10. The attachment arrangement 30a, 30b of the depicted drawbar 100 comprises two sub-arrangements, a front attachment arrangement 30a and a rear attachment arrangement 30b wherein the front attachment arrangement 30a is arranged in front of the rear attachment arrangement 30b along the principal direction of travel, when the drawbar 100 is pulled by a towing vehicle. However, it is understood that this attachment arrangement 30a, 30b is merely an example and that other types of attachment arrangements configured to allow connection between the holes 111 and the chassis frame may be used.

To make the drawbar 100 telescopic, the connection feature 162 (here in the form of a loop connector) is attached to an inner profile 160. More specifically, the connection feature 162 is provided at an end portion of the inner profile 160. The inner profile 160 is of dimensions such that it may slidably fit inside the main profile 110. Hence, the inner profile 160 of the depicted drawbar is slidingly arranged inside the main profile 110, as illustrated in Fig. 2. The main profile 21 has an open end allowing the inner profile 22 to be inserted and extend telescopically beyond the reach of the main profile 21.

Hereby, the longitudinal positioning of the connection feature 162 relative to the trailer 10 is adjustable by sliding the inner profile 160 in or out of the main profile 110. In other words, the length of the drawbar 100 is adjustable. A locking arrangement 164 is provided to allow locking the inner profile 160 relative to the main profile 110 in two or more positions. The locking arrangement 164 may e.g. be realized by at least two apertures formed in the inner profile 160 and at least one aperture formed in the main profile 110 whereby a pin or piston can be inserted through a respective aperture of each profile 110, 160 when two apertures align, to lock of the inner profile 160 relative to the outer profile 110. The locking pin may be withdrawn and inserted manually or automatically using a pin actuator 166 arranged over the aperture in the main profile 110.

Now also turning to Fig. 3. Fig. 3 shows an exemplifying drawbar 100 of a fixed length, i.e. a non-telescopic drawbar 100. The drawbar 100 of Fig. 3 is similar to the drawbar 100 of Fig. 2. Given the similarities, mainly differences will be described hereinafter. The main profile 110 of the non-telescopic drawbar 100 also comprises a reinforcing bracket 140 and fixation elements 150, 160 like the drawbar 100 of Fig. 2. Thus, the reinforcing bracket 140 and the fixation elements 150, 160 will be discussed in greater detail below with reference to Figs. 4 and 5.

A major difference between the telescopic drawbar 100 of Fig. 2 and the non-telescopic drawbar 100 of Fig 3 resides in that the inner profile 160 carrying the connection feature 162 may be attached and fixed directly to the main profile 110 using e.g. bolts 115 or pins as illustrated in Fig. 3. However, in such a case, depending on the design, the length of the drawbar 100 may according to some designs be adjusted by detaching the bolts 115 or pins and sliding the inner profile 160 in relation to the main profile 110 before reattaching the bolts 115 or pins at a different location of the inner profile 160. Alternatively, it is envisaged that the inner profile 160 may be omitted entirely whereby the connection feature 162 may be mounted directly to the main profile 110.

Now turning to Figs. 4 and 5. Fig 4 illustrates a closeup view of the end portion 112 of the main profile 110 where the reinforcing bracket 140 is attached to the to the main profile 110. Fig. 5 on the other hand, illustrates a closeup view of the end portion 112 of the main profile 110 where the reinforcing bracket 140 has been elevated in relation to the to the main profile 110 to more clearly revel the design of the reinforcing bracket 140 and the end portion 112 of the main profile 110.

As illustrated in Figs. 4 and 5, the reinforcing bracket 140 comprises a first side 144, an opposite second side 146, and a top side 148 connecting the first and second side 144, 146. Thus, the top side 148 extends between the first side 144 and the second side 146. As illustrated in Fig. 4, the top side 148 of the reinforcing bracket 140 abuts the top surface 118 of the main profile 110. Correspondingly, the first side 144 abuts the first side surface 114 of the main profile 110, and the second side 146 abuts the second side surface 116 of the main profile 110.

As illustrated in Fig. 4, the reinforcing bracket 140 is attached to the end portion 112 of the main profile by first fixation elements 150 and second fixation elements 160. The depicted first fixation elements 150 are formed as bolts 150. The second fixation elements 160 are not visible as such in Fig. 4 but the locations of the second fixation elements 160 are generally indicated in Fig. 4. The second fixation elements 160 are like the first fixation elements 150 formed as bolts.

The first fixating elements 150 extend through the reinforcing bracket 140 at the first side 144 and through the main profile at the first side surface 114 as illustrated in Fig. 4. Correspondingly, the second fixating elements 160 extend through the reinforcing bracket 140 at the second side 146 and through the main profile 110 at the second side surface 116. In this way, the reinforcing bracket 140 is firmly fixed to the end portion 112 of the main profile 110, such that forces may be efficiently transferred between the main profile 110 and the reinforcing bracket 140.

In Fig. 4 two first fixating elements 150 in form of bolts 150 are used in combination with two second fixating elements 160 in form of bolts to attach the reenforcing bracket 140 to the main profile 110. It is however to be noted that any number of first and second fixating elements may be used. In practice, the at least one first fixating element 150 may comprise at least two first fixating elements 150 and the at least one second fixating element 160 may comprise at least two second fixating elements 160.

Further, each fixation element 150, 160 may be a threaded fixation element 150, 160, such as a screw or a bolt. Furthermore, each fixation element 150, 160 may be a rivet. It is to be noted that threaded and non-threaded fixation elements, such as rivets, may be used in combination.

As illustrated in Figs. 4 the depicted reinforcing bracket 140 is arranged outside of the main profile 110.

As best illustrated in Fig. 5, the reinforcing bracket 140 may comprise an opening 141 associated with each fixating element 150, 160. Correspondingly, the main profile 110 may comprise an opening 117 associated with each fixating element 150, 160. In this way, first fixation elements 150 may be inserted through relevant openings 141, 117 such that the first fixating elements 150 extend through the reinforcing bracket 140 at the first side 144 and through the main profile at the first side surface 114. Correspondingly, in this way, second fixation elements 160 may be inserted through relevant openings 141, 117 such that the second fixating elements 160 extend through the reinforcing bracket 140 at the second side 146 and through the main profile at the second side surface 116.

As best illustrated in Fig. 5, the main profile 110 may comprise a slit 119. The depicted slit 119 extends through the main profile 110 at the top surface 118. Further, the depicted slit 119 extends from the open end of the main profile 110 at the end portion 112. Furthermore, as illustrated in Fig. 5, the slit 119 extends substantially along the longitudinal extension of the main profile 110. Moreover, the depicted slit 119 overlaps the location of reinforcing bracket 140. In this way, the end portion 112 of the main profile 110 is allowed to expand or to be compressed in response to attaching the reinforcing bracket 140 to the end portion 112 by means of the fixation elements 150, 160. This in turn may provide for an adequate or good surface contact between the main profile 110 and the reinforcing bracket 140.

The slit 119 may, as illustrated in Fig. 5 extend beyond the first and second fixating element 150 ,160 along the longitudinal extension of the main profile 110 as seen from the open end of the main profile 110. In this way, expansion or compression of the end portion 112 by means of the fixation elements 150, 160 may be facilitated.

The slit 119 may, as seen from the open end of the main profile 110, terminate by being widened and rounded, as illustrated in Fig. 5. In this way undesired cracking or extension of the slit 119 may be counteracted or prevented.

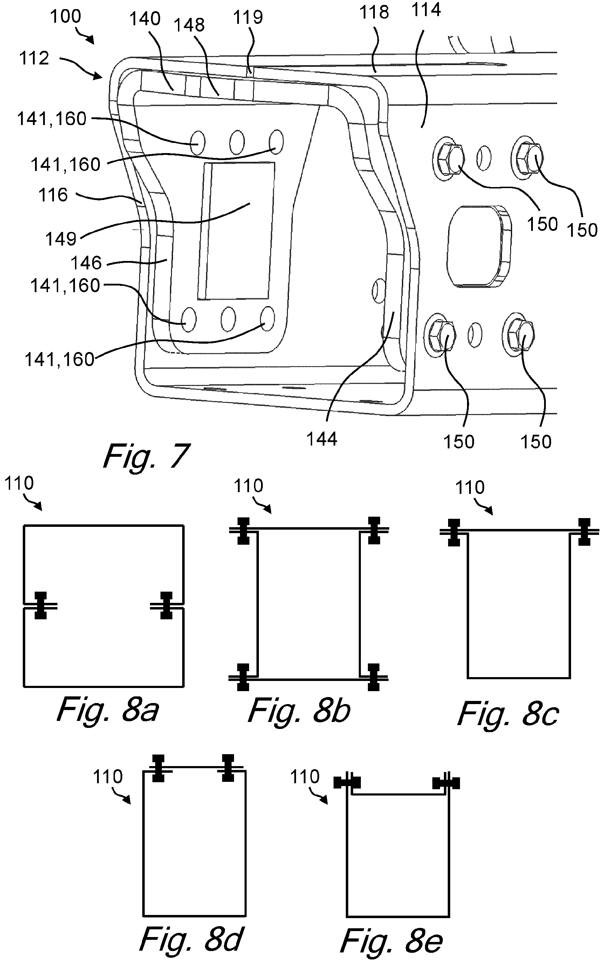

Now also tuning to Figs. 6 and 7. Fig. 6 illustrates a closeup view of an end portion 112 of a main profile 110 of a slightly different deign as compared to the main 110 profile of Figs. 2-5. Further, in Fig. 6, the end portion 112 of the main profile 110 is provided with a reinforcing bracket 140 of a different design as compared to the reinforcing bracket 140 of Figs. 4 and 5. Fig. 7 on the other hand, illustrates the end portion 112 of the main profile 110 and the attachment bracket 140 of Fig. 6 when the inner profile 160 has been removed so as to more clearly reveal the design of the reinforcing bracket 140. The main profile 110 and the reinforcing bracket 140 of Figs. 6 and 7 are similar to the main profile 110 and the reinforcing bracket 140 of Figs. 2-5. Given the similarities, relevant differences will mainly be described below.

The depicted reinforcing bracket 140 of Figs. 6 and 7 is arranged inside of the main profile 110, between the inner profile 160 and the main profile 110.

The depicted reinforcing bracket 140 of Figs. 6 and 7 comprises like the reinforcing bracket 140 of Figs. 4 and 5 a first side 144, an opposite second side 146, and a top side 148 connecting the first and second side 144, 146. As best illustrated in Fig. 7, the top side 148 of the reinforcing bracket 140 abuts the top surface 118 of the main profile 110. Correspondingly, the first side 144 abuts the first side surface 114 and the second side 146 abuts the second side surface 116 of the main profile.

As illustrated in Fig. 7, the reinforcing bracket 140 is attached to the end portion 112 of the main profile 110 by first fixation elements 150 and second fixation elements 160. However, in Figs. 6 and 7 four first fixation elements 150 and four second fixation elements 160 are used to attach the reinforcing bracket 140 in relation to the main profile 110. Any type of suitable fixation elements 150, 160 may be used to advantage, such as screws, bolts or rivets.

As illustrated in Figs. 6 and 7, the main profile 110 is provided with a slit 119. Although the slit 119 of Figs. 6 and 7 has a slightly different design as compared to the slit 119 described above in conjunction with Fig. 5, the slit 119 of Figs. 6 and 7 has overall function as the slit 119 of Fig. 5, i.e. to allow expansion or compression of the end portion 112 of the main profile 110.

The first fixating elements 150 extend through the reinforcing bracket 140 at the first side 144 and through the main profile at the first side surface 114 as illustrated in Figs. 6 and 7. Correspondingly, the second fixating elements 160 extend through the reinforcing bracket 140 at the second side 146 and through the main profile 110 at the second side surface 116. In this way, the reinforcing bracket 140 is firmly fixed to the end portion 112 of the main profile 110, such that forces may be efficiently transferred between the main profile 110 and the reinforcing bracket 140.

The reinforcing bracket 140 may, as illustrated in Fig. 7 comprise a recess 149 configured to receive and support a slide block. Thus, the recess 149 may be formed so as to receive and retain a slide block for reducing the friction and wear between the reinforcing bracket 140 and the inner profile 160. The slide block may thus be inserted into the recess 149 prior to inserting the inner profile 160 into the main profile 110. Once the inner profile 160 has been inserted into the main profile 110, the slide block may be retained in the recess 149 by being disposed between the inner profile 160 and the main profile 110. The person skilled in the art will appreciate that the slide block may be realized using different types of materials, such as a polymer material and/or a metal material. For example, the slide block is formed of or comprises PTFE, is formed of or comprises polyaramid (nylon) and/or is formed of or comprises a metal. The slide block may for instance be a solid polymer block, such as a solid nylon block or a solid PTFE block. When the slide block is realized using metal the slide block metal is preferably a metal with a lower hardness compared to the inner profile, whereby the slide block will be worn out while leaving the inner profile intact.

Now referring jointly to the drawbars 100 of Figs. 2-7. In the above drawbars 100, each fixating element 150, 160 may be a threaded fixating element, such as a screw or bolt. In such a case, each threaded fixating element 150, 160 may threadedly engage a threaded member arranged inside of the innermost one of the main profile 110 and the reinforcing bracket 140. Such a threaded member may for instance be a bolt or plate comprising one or more threaded openings or holes. Thus, in the drawbar 100 of Figs. 2-5 a threaded member, such as a nut, may be placed inside of the main profile 110. Similarly, in the drawbar 100 of Figs. 6 and 7 a threaded member, such as a nut, may be placed inside of the reinforcing bracket 140. A respective threaded member may be used for each fixation element 150, 160. A threaded member including two or more threaded openings or holes may be used for a corresponding number of fixation elements 150, 160.

It is however to be understood that some fixating elements 150, 160 may be threaded fixation elements, whereas other fixation elements 150, 160 may be non-threaded fixation elements, such as pins or rivets.

Now again referring jointly to the drawbars 100 of Figs. 2-7. In the above drawbars 100, when each fixating element 150, 160 is a threaded fixating element, such as a screw or bolt, the openings 117, 141 of the innermost one of the main profile 110 and the reinforcing bracket 140 may be threaded. In this way, each threaded fixating element may threadedly engage a respective one of the openings 117, 141 of the innermost one of the main profile 110 and the reinforcing bracket 140. Thus, in the drawbar 100 of Figs. 2-5 the openings 117 of the main profile 110 may be threaded. Similarly, in the drawbar 100 of Figs. 6 and 7 the openings 141 of the reinforcing bracket 140 may be threaded.

It is however to be understood that some openings 117, 141 of the innermost one of the main profile 110 and the reinforcing bracket 140 may be threaded whereas other openings 117, 141 may be non-threaded. In this way, a combination of threaded fixation elements and non-threaded fixation elements may be used. It is further to be understood that non threaded fixation elements, such as pins or rivets, may be used in combination with threaded openings 117, 141 of the innermost one of the main profile 110 and the reinforcing bracket 140.

Now again referring jointly to the drawbars 100 of Figs. 2-7. The reinforcing bracket 140 of Figs. 2-7 may be formed by being bent from sheet metal. In this way, a strong reinforcing bracket 140 with a well-controlled thickness may be realized. To this end a material thickness of the reinforcing bracket 140 may be at least 5 mm, or at least 8 mm, depending on the size and/or application of the drawbar 100. Thus, the material thickness of the reinforcing bracket 140 may be adapted to the overall size of the drawbar 100. Further, the material thickness of the reinforcing bracket 140 may be adapted to application of the drawbar 100. In this way, the material thickness of the reinforcing bracket 140 may be adapted to the load that the drawbar 100 is subjected to during use. It is currently believed that an optimal balance between strength and material consumption is achieved when the material thickness of the main profile 110 is less than 90% of a material thickness of the reinforcing bracket 140. However, when the reinforcing bracket 140 is placed inside of the main profile 110 like in Figs. 6 and 7, the reinforcing bracket 140 may to advantage be made thicker and be provided with threaded openings 141. This to allow a sufficiently long threaded engagement of the first and second fixation elements 150, 160.

The reinforcing bracket 140 of Figs. 2-7 may be integrally formed or may be formed by joining two or more parts.

As illustrated in Figs. 2-7, the main profile 110 may in practice have a substantially rectangular cross-section. The main profile 110 may to advantage be formed by being bent from sheet metal. In this way, a strong main profile 110 with a well-controlled thickness may be realized. However, the main profile 110 may be formed by joining different parts which jointly forms the main profile 110. Thus, the main profile 110 may be formed by welding, bolting or riveting together two or more parts. In this regard, the main profile may to advantage be formed by joining parts which extends along the entire length of the main profile 110. It is however to be noted that some parts which may be joined to form the main profile 110 may not extend along the entire length of the main profile 110.

Now referring to Figs. 8a-8d. Figs. 8a-8d illustrates exemplifying cross-sections of main profiles 110 of different design, where the main profiles 110 are formed by joining two or more parts. The parts forming the main profile 110 may be joined to each other using any suitable joining technology, such as welding, bolting or riveting. In Fig. 8a, two generally U-shaped parts are joined on the inside of the main profile 110 to form the main profile 110. In Fig. 8b, two generally U-shaped parts and two flat parts are joined to form the main profile 110. The parts are joined on the outside of the main profile 110. In Fig. 8c, a generally U-shaped part and a flat part are joined to form the main profile 110. The parts are joined on the outside of the main profile 110. In Fig. 8d a generally U-shaped part and a flat part are joined to form the main profile 110. In Fig. 8d the parts are joined at the top surface of the main profile 110. In Fig. 8e, two generally U-shaped parts of different sizes are joined to form the main profile 110. The parts are joined at a top region of the main profile 110.

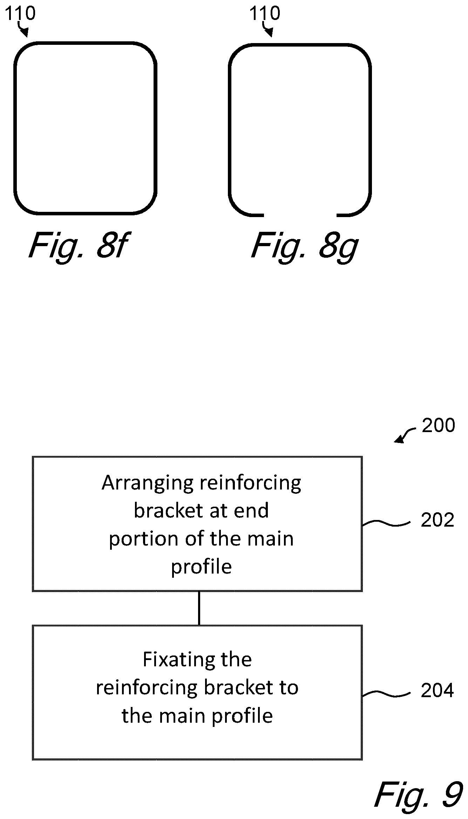

Fig. 8f shows a cross-section of a main profile 110 made as a single piece. The main profile 110 may e.g. be a cold formed rectangular hollow section. Accordingly, it is envisaged that the main profile 110 may be made as a single piece (as shown in Fig. 8f) or from an aggregate of multiple pieces as exemplified by the embodiments of Figs. 8a-8e. Furthermore, it is noted that the main profile 110 is not necessarily a circumferentially closed profile as shown in Figs. 8a-8f and it is envisaged that one or more slits or apertures may be formed along the longitudinal extension of the main profile 110 as shown in Fig. 8g. Accordingly, the main profile 110 may be circumferentially closed as exemplified by the embodiments of Figs. 8a-8f or circumferentially open, as exemplified by the embodiment of Fig. 8g.

Now referring to Fig. 9. Fig 9 is a flow chart of a method 200 for manufacturing a drawbar 100 from a hollow elongated main profile 110 and a reinforcing bracket 140. The drawbar 100 may be of the types described above. Further the main profile 110 and the reinforcing bracket 140 may be of the types described above. More specifically, Fig 9 is a flow chart of a method 200 for manufacturing a drawbar 100 from a hollow elongated main profile 110, configured to be arranged substantially parallel to a principal towing direction of the trailer 10 for pulling the trailer 10, the hollow elongated main profile 110 comprising, at an end portion 112 thereof, a first side surface 114, an opposite second side surface 116, and a top surface 118 connecting the first and second side surfaces 114, 116, each surface 114, 116, 118 extending over a portion of a longitudinal extension of the hollow elongated main profile 110, and a reinforcing bracket 140 comprising a first side 144, an opposite second side 146, and a top side 148 connecting the first and second side 144, 146.

The method 200 comprises, arranging 202 the reinforcing bracket 140 at the end portion 112 of the main profile 110 such that the top side 148 abuts the top surface 118 of the main profile 110 and such that the first side 144 and the second side 146 abut an associated one of the first and second side surface 114, 116 of the main profile 110. In this way, the reinforcing bracket 140 may be positioned as intended in relation to the main profile 110.

The method 200 proceeds by fixating 204 the reinforcing bracket 140 to the main profile 110 by inserting at least one first fixating element 150 through the reinforcing bracket 140 at the first side 144 and through the main profile 110 at the first side surface 114 and by inserting at least one second fixating element 160 through the reinforcing bracket 140 at the second side 146 and through the main profile 110 at the second side surface 116. In this way, the reinforcing bracket 140 may be attached to or fixed in relation to the main profile 110. More specifically, in this way the reinforcing bracket 140 may firmly fixed to the end portion 112 of the main profile 110, such that forces may be efficiently transferred between the main profile 110 and the reinforcing bracket 140. Thus, an improved drawbar 100 may be manufactured.

Figs. 10a-10b illustrate various use cases for the telescopic drawbar 100 described herein. Of course, the non-telescopic drawbar may be used in the analogous manner and in the description below the telescopic drawbar 100 may be replaced with the non-telescopic drawbar.

Fig. 10a shows an embodiment wherein the drawbar 100 s used for a center-axel rigid drawbar trailer 10a. In this type of trailer 10a, the drawbar 100 is rigidly attached to the trailer chassis. The towing vehicle 15 may be connected to the drawbar 100 to tow the center-axle rigid drawbar trailer 10a.

In Fig. 10b the drawbar 100 is instead connected to a dolly, which in turn is configured to be connected to a trailer 10b. The dolly 14 is configured to rotate relative the trailer 10b around a rotational axis perpendicular to the ground and the dolly 14 has one or more wheel pairs for improving maneuverability. Hereby, the drawbar 100 may be fixated directly to the trailer chassis (see e.g. Fig. 11a) or be rotatable relative to the trailer chassis by being connected to a dolly 14 which in turn is connected to the trailer 10b.

It will be appreciated that the present inventive concept is not limited to the variants and examples shown. Several modifications and variations are thus conceivable within the scope of the invention which thus is defined by the appended claims.

## Claims

1. A drawbar (100) for a trailer (10) or a dolly (14) comprising:
a hollow elongated main profile (110), configured to be arranged substantially parallel to a principal towing direction of the trailer/dolly (10, 14) for pulling the trailer/dolly (10, 14), the hollow elongated main profile (110) comprising, at an end portion (112) thereof, a first side surface (114), an opposite second side surface (116), and a top surface (118) connecting the first and second side surfaces (114, 116), each surface (114, 116, 118) extending over a portion of a longitudinal extension of the hollow elongated main profile (110),
a reinforcing bracket (140) comprising a first side (144), an opposite second side (146), and a top side (148) connecting the first and second side (144, 146), wherein the top side (148) abuts the top surface (118) of the main profile (110), and wherein the first side (144) and the second side (146) abut an associated one of the first and second side surface (114, 116) of the main profile (110), and
at least one first fixating element (150) extending through the reinforcing bracket (140) at the first side (144) and through the main profile at the first side surface (114), and at least one second fixating element (160) extending through the reinforcing bracket (140) at the second side (146) and through the main profile (110) at the second side surface (116).

2. The drawbar (100) according to claim 1, further comprising an inner profile (160) slidingly arranged inside the main profile (110), such that a length of the drawbar (100) is adjustable, wherein the inner profile (160) extends out of an open end of the main profile (100) at said end portion (112), wherein the inner profile (160) is configured to be locked in at least two positions relative the main profile (110), and wherein an end portion of the inner profile (160) comprises a coupling arrangement (162) configured to be connected to a towing vehicle, such as a truck.

3. The drawbar (100) according to claim 1 or claim 2, wherein the reinforcing bracket (140) is arranged outside of the main profile (110).

4. The drawbar (100) according to claim 1 or claim 2, wherein the reinforcing bracket (140) is arranged inside of the main profile (110), between an inner profile (160) and the main profile (110).

5. The drawbar (100) according to claim 4, wherein the reinforcing bracket (140) comprises a recess (149) configured to receive and support a slide block.

6. The drawbar (100) according to any of the preceding claims, wherein the main profile (110) comprises a slit (119) extending through the main profile (110) at the top surface (118), the slit (119) extending from an open end of the main profile (110) at said end portion (112) substantially along the longitudinal extension of the main profile (110) and at least partially overlapping with the reinforcing bracket (140).

7. The drawbar (100) according to claim 6, wherein the slit (119) extends beyond the first and second fixating element (150 ,160) along the longitudinal extension of the main profile (110) as seen from the open end of the main profile (110).

8. The drawbar (100) according to any of the preceding claims, wherein the reinforcing bracket (140) comprises an opening (141) associated with each fixating element (140, 150) and wherein the main profile (110) comprises an opening (117) associated with each fixating element.

9. The drawbar (100) according to claim 8, wherein each fixating element (150, 160) is a threaded fixating element (150, 160), such as a screw or a bolt, or a rivet.

10. The drawbar (100) according to claim 9, wherein each fixating element (150, 160) is a threaded fixating element, and wherein each threaded fixating element threadedly engages a threaded member arranged inside of the innermost one of the main profile (110) and the reinforcing bracket (140).

11. The drawbar (100) according to claim 9, wherein each fixating element (150, 160) is a threaded fixating element, and wherein the openings (117) of the innermost one of the main profile (110) and the reinforcing bracket (140) are threaded and wherein each threaded fixating element threadedly engages a respective one of the openings (117, 141) of the innermost one of the main profile (110) and the reinforcing bracket (140).

12. The drawbar (100) according to any of the preceding claims, wherein the at least one first fixating element (150) comprises at least two first fixating elements (150) and wherein the at least one second fixating element (160) comprises at least two second fixating elements (160).

13. The drawbar (100) according to any of the preceding claims wherein the main profile (110) has a substantially rectangular cross-section and is formed by being bent from sheet metal and/or wherein the reinforcing bracket (140) is formed by being bent from sheet metal.

14. A trailer (10) or a dolly (14) comprising a drawbar (100) according to any of the preceding claims.

15. A method (200) for manufacturing a drawbar (100) for a trailer (10) or dolly (14) from:
a hollow elongated main profile (110), configured to be arranged substantially parallel to a principal towing direction of the trailer (10) or dolly (14) for pulling the trailer (10) or dolly (14), the hollow elongated main profile (110) comprising, at an end portion (112) thereof, a first side surface (114), an opposite second side surface (116), and a top surface (118) connecting the first and second side surfaces (114, 116), each surface (114, 116, 118) extending over a portion of a longitudinal extension of the hollow elongated main profile (110), and
a reinforcing bracket (140) comprising a first side (144), an opposite second side (146), and a top side (148) connecting the first and second side (144, 146), the method (200) comprising:
arranging (202) the reinforcing bracket (140) at the end portion (112) of the main profile (110) such that the top side (148) abuts the top surface (118) of the main profile (110) and such that the first side (144) and the second side (146) abut an associated one of the first and second side surface (114, 116) of the main profile (110), and
fixating (204) the reinforcing bracket (140) to the main profile (110) by inserting at least one first fixating element (150) through the reinforcing bracket (140) at the first side (144) and through the main profile (110) at the first side surface (114) and by inserting at least one second fixating element (160) through the reinforcing bracket (140) at the second side (146) and through the main profile (110) at the second side surface (116).
